(19) Europäisches Patentamt
European Patent Office
Office européen des brevets

(11) **EP 3 207 348 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(21) Anmeldenummer: **14786176.9**

(22) Anmeldetag: **17.10.2014**

(51) Int Cl.:
*G01L 13/02* *(2006.01)*     *G01L 27/00* *(2006.01)*
*G01L 9/00* *(2006.01)*

(86) Internationale Anmeldenummer:
**PCT/EP2014/072288**

(87) Internationale Veröffentlichungsnummer:
**WO 2016/058647 (21.04.2016 Gazette 2016/16)**

(54) **VERFAHREN ZUR ERMITTLUNG EINS DRUCKMESSSIGNALS UND DRUCKMESSANORDNUNG HIERFÜR**

METHOD FOR DETERMINING A PRESSURE MEASUREMENT SIGNAL AND CORRESPONDING PRESSURE GAGE

PROCÉDÉ DE DÉTERMINATION D'UN SIGNAL DE MESURE DE PRESSION ET CAPTEUR DE PRESSION CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.08.2017 Patentblatt 2017/34**

(73) Patentinhaber: **VEGA Grieshaber KG**
**77709 Wolfach (DE)**

(72) Erfinder:
• **JACOB, Jörn**
**77709 Wolfach (DE)**

• **WELLER, Bernhard**
**77709 Wolfach (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
**EP-A1- 0 065 845     WO-A1-2004/013593**
**DE-A1- 4 107 345     US-A1- 2007 209 443**

**Beschreibung**

Verfahren zur Ermittlung eines Druckmesssignals und Druckmessanordnung hierfür.

Die vorliegende Erfindung betrifft ein Verfahren zur Ermittlung eines Druckmesssignals gemäß dem Oberbegriff des Patentanspruchs 1 sowie eine Druckmessanordnung zur Durchführung eines solchen Druckmessverfahrens gemäß dem Oberbegriff des Patentanspruchs 12.

Stand der Technik ist aus US2007/0209443 A1, EP006584 und WO2004013593 A1 bekannt.

Aus dem Stand der Technik sind verschiedene Druckmessverfahren und Druckmessanordnungen bekannt und werden eingesetzt. Aus dem Stand der Technik sind insbesondere keramisch kapazitive Druckmesszellen bekannt, die sich gegenüber anderen Messzellen u. a. durch eine sehr hohe Überlastfestigkeit auszeichnen. Typische keramisch kapazitive Druckmesszellen bestehen aus einem Grundkörper, an dem vorderseitig eine Messmembran über einen Abstandshalter, beispielsweise ein Glaslot, angeordnet ist. Sowohl an der Messmembran als auch an dem Grundkörper sind Elektroden ausgebildet, die in einem drucksensitiven Bereich der Messmembran eine Messkapazität und in einem weniger drucksensitiven Bereich der Messmembran eine Referenzkapazität ausbilden. Wirkt ein Druck vorderseitig auf die Messmembran, so ändert sich der Abstand zwischen den an der Messmembran und dem Grundkörper ausgebildeten Elektroden und damit verändert sich die Kapazität insbesondere der Messkapazität, sodass durch die Kapazitätsänderung auf die Größe der Druckänderung geschlossen werden kann. Aus dem Stand der Technik ist es üblich, dass ein Druckmesssignal D zur Ermittlung des auf die Messmembran einwirkenden Druckes gemäß der Formel

$$D = 1 - C_r / C_m$$

ermittelt wird. Dadurch, dass bei der Ermittlung des Druckmesswertes das Verhältnis aus Referenzkapazität $C_r$ und Messkapazität $C_m$ berücksichtig wird, können Schwankungen der Umgebungsbedingungen, d. h. insbesondere Änderungen der Temperatur und der Luftfeuchtigkeit berücksichtigt werden, da diese bei dem gebildeten Quotienten keinen Einfluss mehr entfalten.

Da aber in der Regel die Referenzkapazität $C_r$ deutlich weniger drucksensitiv ist als die Messkapazität $C_m$ können mit der bekannten Auswertung fast ausschließlich Änderungen der Messkapazität detektiert werden und das gemäß obiger Formel ermittelte Druckmesssignal D geht in Sättigung, sobald die Messmembran im Bereich der Messkapazität $C_m$ an dem Grundkörper anliegt.

Bei diesen aus dem Stand der Technik bekannten keramisch kapazitiven Druckmesszellen, wird es daher als nachteilig empfunden, dass eine Ermittlung des Druckes über den Nennbereich der Druckmesszelle, d. h. den messtechnisch zugelassenen Bereich, hinaus nur unzureichend möglich ist und insbesondere Überschreitungen des zulässigen Nenndruckes nur unzureichend erfassbar sind. Mit den herkömmlichen Auswertungsmethoden, bei denen eine Ermittlung eines Druckmesssignals gemäß der Formel

$$D = 1 - C_r / C_m$$

erfolgt, kann ein anliegender Druck lediglich bis ungefähr zum zweifachen Nenndruck der Druckmesszelle erfasst werden. Bei einer Überschreitung dieses Druckes legt sich die Messmembran an den Grundkörper der Druckmesszelle an und das gemäß obiger Formel ermittelte Ausgangssignal ändert sich auf Grund des Verhältnisses zwischen Referenzkapazität und Messkapazität annähernd nicht mehr.

Es ist die Aufgabe der vorliegenden Erfindung eine Messwerterfassung auch deutlich über den Nennbereich einer solchen Druckmesszelle hinaus zu ermöglichen und überlastbedingte Ausfälle von Druckmesszellen besser analysieren zu können.

Diese Aufgabe wird durch ein Verfahren mit den Merkmalen des Patentanspruchs 1 sowie eine Druckmessanordnung mit den Merkmalen des Patentanspruchs 12 gelöst.

Ein erfindungsgemäßes Verfahren zur Ermittlung eines Druckmesssignals bei einer kapazitiven Druckmesszelle mit einem Grundkörper und einer vorderseitig an dem Grundkörper angeordneten Messmembran, bei der an dem Grundkörper und an der Messmembran Elektroden angeordnet sind, die in einem Bereich der Messmembran mit hoher Drucksensibilität eine Messkapazität und in einem Bereich der Messmembran mit geringer Drucksensibilität eine Referenzkapazität ausbilden, wobei die Messkapazität und die Referenzkapazität unabhängig voneinander erfasst werden und das Druckmesssignal in einem ersten Messbereich gemäß einer ersten Auswertung aus der Messkapazität und der Referenzkapazität ermittelt wird und das Druckmesssignal in einem zweiten Messbereich gemäß einer zweiten Auswertung aus der Referenzkapazität ermittelt wird, zeichnet sich dadurch aus, dass ein Übergang von der ersten Auswertung zu der zweiten Auswertung erfolgt, wenn das Druckmesssignal gemäß der ersten Auswertung einen Grenzwert überschreitet.

Ausschlaggebend für das vorliegende Verfahren ist damit, dass ein Übergang von der ersten Auswertung zu der zweiten Auswertung abhängig von einem Wert des Druckmesssignals gemäß der ersten Auswertung erfolgt und damit die Grundlage für den Übergang das gemäß der ersten Auswertung durch die Referenzkapazität kompensierte Druckmesssignal ist. Grundsätzlich könnte zwar erwogen werden, einen Übergang von der ersten Auswertung zu der zweiten Auswertung abhängig von einem absoluten Wert der Referenzkapazität oder einem absoluten Wert der Messkapazität zu machen. Beispielsweise offenbart US 2007/209443 A1 eine solche kapazitive Druckmesszelle, bei der der Übergang abhängig von einem absoluten Wert der Referenzkapazität erfolgt. Hierbei bestünde jedoch der Nachteil, dass sich ändernde Umgebungsbedingungen, beispielsweise eine geänderte Temperatur und/oder Luftfeuchtigkeit diese Kapazitätswerte beeinflusst und damit ein Übergang von der ersten Auswertung zu der zweiten Auswertung abhängig von den Umgebungseinflüssen zu unterschiedlichen Bedingungen erfolgen würde. Der Vorteil des erfindungsgemäßen Verfahrens liegt damit darin, dass durch den Übergang auf Basis des kompensierten Wertes ein Übergang von der ersten Auswertung zu der zweiten Auswertung hochpräzise eingestellt und damit auch über den zulässigen Messbereich einer Messzelle hinaus eine präzise Auswertung des anliegenden Druckes ermöglicht wird.

Gemäß einer Ausgestaltung des Verfahrens werden beide Auswertungen gleichzeitig durchgeführt und die erste Auswertung wird verworfen, wenn das Druckmesssignal der ersten Auswertung den Grenzwert übersteigt und die zweite Auswertung wird verworfen, wenn das Druckmesssignal der ersten Auswertung unterhalb des Grenzwertes liegt.

Dadurch, dass beide Auswertungen gleichzeitig durchgeführt werden, wird es ermöglicht, dass abhängig von dem Ergebnis der ersten Auswertung - das wie bereits dargestellt von Schwankungen der Umgebungsbedingungen befreit ist - eine Entscheidung getroffen wird, ob das Ergebnis der ersten Auswertung oder das Ergebnis der zweiten Auswertung als Druckmesssignal ausgegeben wird.

Der Grenzwert, bei dessen Überschreitung der Übergang von der ersten Auswertung zu der zweiten Auswertung erfolgt, liegt

sinnvollerweise bei dem einfachen bis fünffachen, vorzugsweise bei dem zweifachen Nenndruck der Druckmesszelle oder einem dazu korrespondierenden Wert. Bei typischen keramisch kapazitiven Druckmesszellen tritt ein sogenanntes bottoming, d. h. dass die Messmembran an dem Grundkörper auf Grund des einwirkenden Druckes anliegt, ab etwa dem zweifachen Nenndruck der Druckmesszelle auf. Es ist daher sinnvoll, in etwa bei diesem Wert einen Übergang von der ersten Auswertung zu der zweiten Auswertung vorzusehen. Abhängig von der Dimensionierung der Druckmesszelle kann aber auch ein Übergang von der ersten Auswertung zu der zweiten Auswertung bei beispielsweise dem einfachen Nenndruck oder bis zum fünffachen Nenndruck der Druckmesszelle sinnvoll sein.

Ausschlaggebend für die Auswahl des Grenzwertes ist der Zeitpunkt, ab dem eine Sättigung oder eine gravierende Nichtlinearität des Druckmesssignals gemäß der ersten Auswertung zu erwarten ist.

In einem typischen Messverfahren wird das Druckmesssignal für die erste Auswertung gemäß der Formel

$$D1 = 1 - C_r / C_m$$

berechnet. Ausschlaggebend hierfür ist die Erkenntnis, dass die Größe der Messkapazität proportional zur Größe des anliegenden Druckes ist, wobei die Referenzkapazität in diesem Bereich eine sehr geringe Abhängigkeit von dem anliegenden Druck haben sollte.

Ferner ist es sinnvoll, wenn auch in dem zweiten Messbereich bei Drücken oberhalb des Grenzwertes eine Messwertkompensation erfolgt. Insbesondere sollten bei dieser Messwertkompensation Umweltbedingungen wie beispielsweis Temperatur und Luftfeuchtigkeit berücksichtigt sein.

Eine Möglichkeit um eine solche Messwertkompensation zu erzielen liegt darin, bei dem Übergang von der ersten Auswertung zu der zweiten Auswertung den aktuellen Wert der Referenzkapazität zu ermitteln und abzuspeichern. Auf diese Weise kann bei der zweiten Auswertung eine Normalisierung des jeweils aktuell ermittelten Wertes der Referenzkapazität mit dem beim Übergang von der ersten Auswertung zu der zweiten Auswertung ermittelten Wert der Referenzkapazität erfolgen, wodurch zumindest die zu diesem Zeitpunkt herrschenden Umweltbedingungen kompensiert werden können.

Zusätzlich oder alternativ können für die zweite Auswertung auch lediglich Änderungen der Referenzkapazität im Vergleich zu dem abgespeicherten Wert berücksichtigt werden.

Bei Ausgestaltungen, die oberhalb des Grenzwertes nur einer reduzierten Genauigkeit bedürfen oder bei denen nur geringe Schwankungen der Umweltbedingungen zu erwarten sind, besteht ferner die Möglichkeit, den Wert der Referenzkapazität beim Übergang von der ersten Auswertung zur zweiten Auswertung werkseitig vorzugeben und in einem Speicher dauerhaft zu hinterlegen. In diesem Fall kann beispielsweise der Wert der Referenzkapazität bei für den Sensor typischen Umweltbedingungen hinterlegt sein.

Wie bereits erwähnt, kann auf diese Weise der Messwert der Referenzkapazität gemäß der zweiten Auswertung mit dem abgespeicherten Wert der Referenzkapazität kompensiert werden und so eine Reduktion der Einflüsse von Umweltbedingungen erfolgen. Insbesondere kann die zweite Auswertung gemäß der Formel

$$D2 = m\ (C_r(p)\ _-\ C_r\ (p=x))+\ x$$

berechnet werden, wobei $C_r$ (p) den aktuellen Wert der Referenzkapazität, $C_r$ (p = x) den Wert der Referenzkapazität beim Übergang von der ersten Auswertung zur zweiten Auswertung, x den Grenzwert und m eine Konstante darstellt. In einfachen Worten wird damit lediglich die mit einem konstanten Faktor multiplizierte Änderung der Referenzkapazität ab dem Zeitpunkt des Überganges zu der zweiten Auswertung berücksichtigt, wobei der Grenzwert und der Multiplikator werkseitig vorgegeben sind.

Es kann weiter vorteilhaft sein, wenn ein Maximalwert gemäß der zweiten Auswertung und/oder eine Anzahl der Übergänge von der ersten Auswertung zu der zweiten Auswertung in einem Speicher abgelegt wird. Auf diese Weise kann eine maximale Druckbelastung und/oder die Zahl der Überlastzyklen für spätere Auswertungen zur Verfügung gestellt werden.

Eine erfindungsgemäße Druckmessanordnung zur Bereitstellung eines Druckmesssignals mit einer kapazitiven Druckmesszelle mit einem Grundkörper und einer vorderseitig an dem Grundkörper angeordneten Messmembran, wobei an dem Grundkörper und an der Messmembran Elektroden angeordnet sind, die in einem Bereich der Messmembran mit hoher Drucksensibilität eine Messkapazität in einem Bereich der Messmembran mit geringer Drucksensibilität eine Referenzkapazität ausbilden, zeichnet sich durch eine Messelektronik aus, die geeignet ausgebildet ist, ein Druckmessverfahren gemäß einem der vorhergehenden Ansprüche auszuführen.

Vorteilhafterweise ist auf der Messmembran und/oder dem Grundkörper eine die Elektroden bedeckende Isolierung angeordnet, die vorzugsweise als Verglasung ausgebildet ist. Bei vielen aus dem Stand der Technik bekannten Druckmesszellen liegen die, in der Regel als Metallisierung ausgebildeten Elektroden, ungeschützt auf der Messmembran und/oder dem Grundkörper der Druckmesszelle, sodass bei einem bottoming auf Grund der Berührung der Elektroden ein Kurzschluss derselben erfolgt und somit eine Kapazitätsbestimmung nicht mehr möglich ist.

Durch das Vorsehen einer solchen Isolierung kann die Herstellung der Druckmesszelle weiter vereinfacht werden, da es auf diese Weise möglich wird, die Elektrode der Messmembran oder des Grundkörpers durchgehend, vorzugweise als durchgehende Metallisierung, auszubilden und die andere Elektrode zur Ausbildung der Kapazitäten strukturiert, vorzugsweise als strukturierte Metallisierung auszubilden.

Typischerweise wird bei einer derartigen Ausgestaltung die an der Messmembran angeordnete Elektrode bzw. Metallisierung als durchgehende Elektrode bzw. Metallisierung ausgebildet sein, da auf diese Weise lediglich eine einzige elektrische Kontaktierung der Messmembran vorgesehen sein muss. Zur Ausbildung von Mess- und Referenzelektrode ist die auf dem Grundkörper angeordnete Metallisierung strukturiert ausgebildet, wobei beispielsweise die Referenzelektrode die Messelektrode ringförmig umgibt.

Die vorliegende Erfindung wird nachfolgend unter Bezugnahme auf die beigefügten Figuren eingehend erläutert.

Es zeigen:

Fig. 1 einen schematischen Querschnitt durch eine keramisch kapazitive Druckmesszelle, wie sie bei der vorliegenden Erfindung zum Einsatz kommt,

Fig. 2 einen schematisierten Verlauf des Druckmesssignals gemäß einer ersten Auswertung,

Fig. 3 einen schematischen Verlauf der Referenzkapazität bei unterschiedlichen Umgebungsbedingungen,

Fig. 4 den Verlauf der Messkapazität sowie der Referenzkapazität bei einer keramisch kapazitiven Druckmesszelle mit einem Nenndruck von 0,1 bar und

Fig. 5 den Verlauf des Druckmesssignals gemäß der ersten Auswertung bei der Druckmesszelle aus Figur 4.

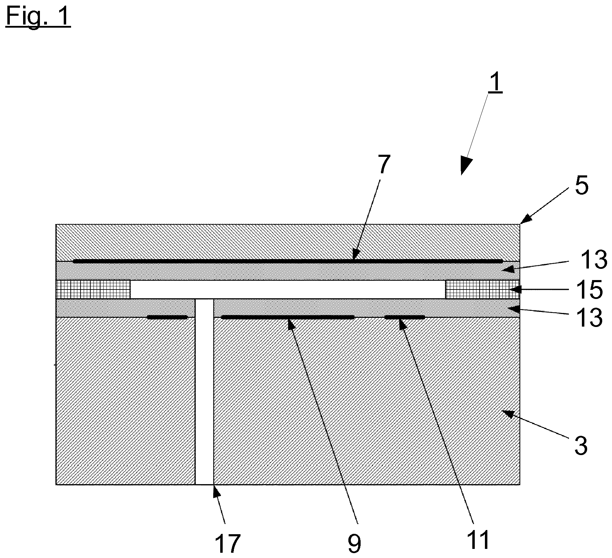

Figur 1 zeigt einen schematischen Querschnitt durch eine keramisch kapazitive Druckmesszelle 1, wie sie bei der vorliegenden Erfindung zum Einsatz kommen kann. Die Druckmesszelle 1 ist im Wesentlichen aus einem Grundkörper 3 aus keramischem Material aufgebaut, an dem vorderseitig über einen Abstandhalter 15, beispielsweise ein Glaslot, eine Messmembran 5 beabstandet angeordnet ist.

An dem Grundkörper 3 und der Messmembran 5 sind einander gegenüberliegend und zueinander beabstandet Elektroden 7, 9, 11 zur Ausbildung einer Messkapazität $C_m$ sowie einer Referenzkapazität $C_r$ ausgebildet, wobei an dem Grundkörper 3 durch eine strukturierte Metallisierung eine zentral angeordnete Messelektrode 9 sowie eine diese ringförmig umgebende Referenzelektrode 11 ausgebildet sind. An der Messmembran 5 ist durch eine durchgehende Metallisierung eine Membranelektrode 7 ausgebildet, die in Zusammenwirkung mit der Messelektrode 9 bzw. der Referenzelektrode 11 die Messkapazität $C_m$ sowie die Referenzkapazität $C_r$ ausbildet.

Die Elektroden 7, 9, 11 sind in dem vorliegenden Ausführungsbeispiel über eine Isolation 13, die beispielsweise als Verglasung ausgeführt sein kann, gegeneinander isoliert und gegen mechanische Einflüsse geschützt. Wenn bei der vorliegenden Druckmesszelle 1 auf Grund von Überdruck die Messmembran 5 derart stark durchgebogen wird, dass sie an dem Grundkörper 3 zur Anlage kommt, so wird durch die Isolation 13 ein Kontakt zwischen den Elektroden 7, 9, 11 und damit ein Kurzschluss zwischen denselben vermieden. Auf diese Weise ist eine Bestimmung der Messkapazität $C_m$ sowie der Referenzkapazität $C_r$ auch im Überdruckfall stets möglich.

Typische keramisch kapazitive Druckmesszellen 1 sind auf Grund des oben beschriebenen Effekts bei Überlast, nämlich dass sich die Messmembran 5 an den Grundkörper 3 anlegt, nur für einen bestimmten Messbereich und dabei insbesondere bis zu einem bestimmten Nenndruck $p_{nenn}$ für die Druckmessung zugelassen. Nichts desto trotz werden derartige Druckmesszellen 1 bisweilen deutlich über den zugelassenen Nenndruck $P_{nenn}$ hinaus mit Druck beaufschlagt. Eine Bestimmung des anliegenden Druckes ist dabei mittels der typischerweise verwendeten ersten Auswertung A1, bei der das erste Druckmesssignal D1 gemäß der Formel

$$D1 = 1 - C_r \,/\, C_m$$

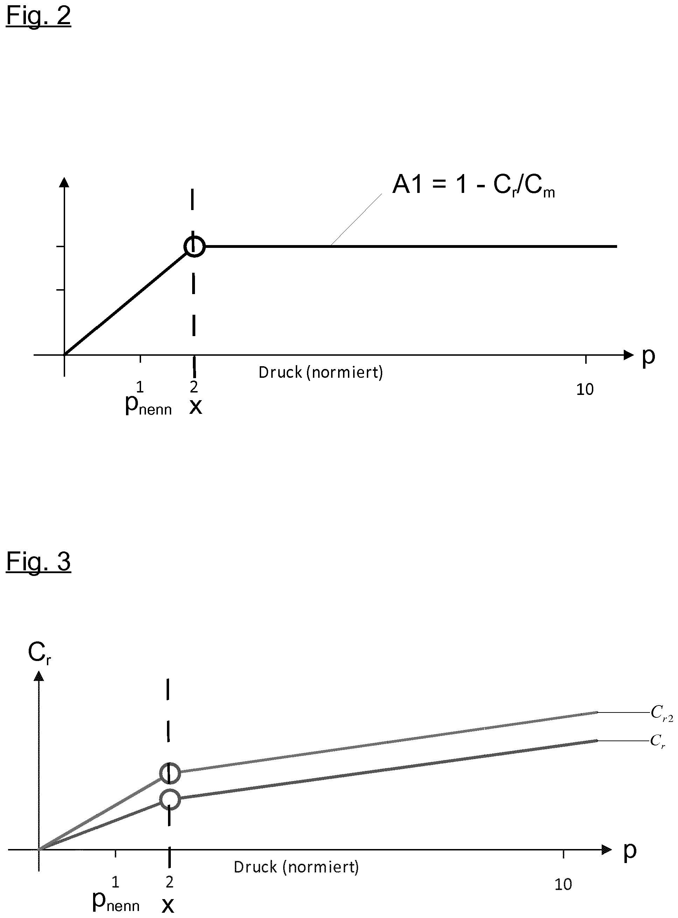

bestimmt wird bis etwa zum zweifachen Nenndruck $p_{nenn}$ der Druckmesszelle 1 möglich. In einem Bereich oberhalb dieses zweifachen Nenndrucks $p_{nenn}$ weist die erste Auswertung A1 typischerweise Nichtlinearitäten und/oder ein Sättigungsverhalten des so ermittelten ersten Druckmesssignals D1 auf, wie dies in Figur 2 dargestellt ist. Die dargestellte Messkurve in Figur 2 zeigt das gemäß der ersten Auswertung A1 ermittelte erste Druckmesssignal D1, wobei der Druck durch den Nenndruck $p_{nenn}$ normalisiert dargestellt ist.

In Figur 3 ist ebenfalls über dem durch den Nenndruck $p_{nenn}$ normierten Druck der Wert der Referenzkapazität $C_r$ bei unterschiedlichen Umweltbedingungen dargestellt. Insbesondere auf Grund einer sich ändernden Luftfeuchtigkeit kann sich die im Inneren der Druckmesszelle 1 sich einstellende Dielektrizitätszahl ändern, was unterschiedliche Verläufe der Referenzkapazität $C_r$ zur Folge hat. Soll eine zuverlässige Druckbestimmung auch über beispielsweise den zweifachen Nenndruck $p_{nenn}$, vormals vorliegend als Grenzwert x in den dargestellten Messkurven eingezeichnet ist, genau erfolgen, so ist eine Kompensation der Umweltbedingungen zur Ermittlung des Wertes der Referenzkapazität $C_r$ notwendig.

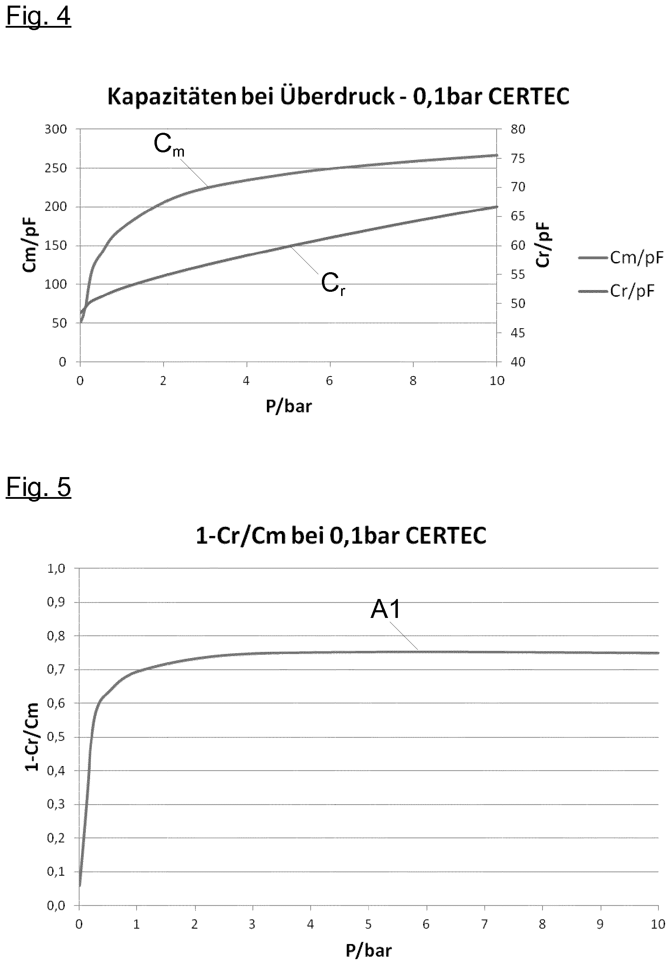

In Figur 4 sind die Werte der Messkapazität $C_m$ der Referenzkapazität $C_r$ für eine keramisch kapazitive Druckmesszelle 1 mit einem Nenndruck $p_{nenn}$ von 0,1 bar im Bereich von 0 bis 10 bar dargestellt. Wie aus den Messkurven in Figur 4 eindeutig entnommen werden kann, beträgt der Wert der Messkapazität $C_m$ ein Vielfaches des Wertes der Referenzkapazität $C_r$, wobei aber die Messkapazität $C_m$ ein lineares Verhalten lediglich bis etwa zum zweifachen Nenndruck $p_{nenn}$ der Messzelle 1 aufweist, und die Referenzkapazität $C_r$ bei einem deutlichen Überschreiten des Nenndruckes $p_{nenn}$ sich weiterhin weitestgehend linear ändert. Auf Grund dieser linearen Änderung der Referenzkapazität $C_r$ im Überlastbereich kann bei einer Auswertung der Referenzkapazität $C_r$ eine Bestimmung des anliegenden Druckes sogar bis zu einem hundertfachen Überschreiten des zulässigen Nenndruckes $p_{nenn}$ der Druckmesszelle 1, vorliegend bis zu 10 bar, erreicht werden.

In Figur 5 ist das gemäß der ersten Auswertung A1 ermittelte erste Druckmesssignal D1 gezeigt, wobei aus der Darstellung in Figur 5 deutlich hervorgeht, dass mittels dieser ersten Auswertung A1 eine lineare Änderung des ersten Druckmesssignals D1 nur bis etwa zum doppelten Nenndruck $p_{nenn}$ der Druckmesszelle 1 zu verzeichnen ist. Darüber hinaus ist das mittels der ersten Auswertung A1 erzielte erste Druckmesssignal D1 zuerst nicht mehr linear und geht dann in die Sättigung.

Das gemäß der zweiten Auswertung A2 ermittelte zweite Druckmesssignal D2 kann beispielsweise gemäß der Formel

$$D2 = m \times (C_r\,(p) - C_r\,(p = x)) + x$$

ermittelt werden, wobei m eine Messkonstante, $C_r\,(p)$ den bei dem aktuellen Druck ermittelten Wert der Referenzkapazität $C_r$, $C_r\,(p = x)$ den beim Übergang von der ersten Auswertung A1 zur zweiten Auswertung A2 ermittelten Wert der Referenzkapazität $C_r$ bei dem Grenzwert x und x den Grenzwert darstellt.

Für höhere Genauigkeitsanforderungen wäre es auch denkbar, die zweite Auswertung A2 mit einem höhergradigen Polynom beispielsweise mit einer Approximation des anliegenden Druckes auszuführen oder bei geringeren Genauigkeitsanforderungen den Wert der Referenzkapazität für eine Eigenkalibrierung werkseitig vorzugeben.

Bezugszeichenliste

| | |
|---|---|
| 1 | Druckmesszelle |
| 3 | Grundkörper |
| 5 | Messmembran |
| 7 | Membranelektrode |
| 9 | Messelektrode |
| 11 | Referenzelektrode |
| 13 | Isolation |
| 15 | Abstandshalter |
| 17 | Druckausgleichsöffnung |

| | |
|---|---|
| A1 | erste Auswertung |
| A2 | zweite Auswertung |
| D1 | erstes Druckmesssignal |
| D2 | zweites Druckmesssignal |

| | |
|---|---|
| x | Grenzwert |

| | |
|---|---|
| $C_m$ | Messkapazität |
| $C_r$ | Referenzkapazität |

| | |
|---|---|
| D | Druckmesssignal |

| | |
|---|---|
| $p_{nenn}$ | Nenndruck |

**Patentansprüche**

1. Verfahren zur Ermittlung eines Druckmesssignals (D) bei einer kapazitiven Druckmesszelle (1) mit einem Grundkörper (3) und einer vorderseitig an dem Grundkörper (3) angeordneten Messmembran (5), wobei an dem Grundkörper (3) und an der Messmembran (5) Elektroden (7, 9, 11) angeordnet sind, die in einem Bereich der Messmembran (5) mit hoher Drucksensibilität eine Messkapazität $C_m$ und in einem Bereich der Messmembran (5) mit geringerer Drucksensibilität eine Referenzkapazität ($C_r$) ausbilden, wobei die Messkapazität ($C_m$) und die Referenzkapazität ($C_r$) unabhängig voneinander erfasst werden und das Druckmesssignal (D) in einem ersten Messbereich gemäß einer ersten Auswertung (A1) aus der Messkapazität $C_m$ und der Referenzkapazität ($C_r$) ermittelt wird und das Druckmesssignal (D) in einem zweiten Messbereich gemäß einer zweiten Auswertung (A2) aus der Referenzkapazität ($C_r$) ermittelt wird,
**dadurch gekennzeichnet, dass**
ein Übergang von der ersten Auswertung (A1) zu der zweiten Auswertung (A2) erfolgt, wenn das Druckmesssignal (D) gemäß der ersten Auswertung (A1) einen Grenzwert (x) überschreitet.

2. Verfahren nach Anspruch 1,
**dadurch gekennzeichnet, dass**
beide Auswertungen (A1, A2) gleichzeitig erfolgen und die erste Auswertung (A1) verworfen wird, wenn das Druckmesssignal (D) der ersten Auswertung (A1) den Grenzwert (x) übersteigt und die zweite Auswertung (A2) verworfen wird, wenn das Druckmesssignal (D) der ersten Auswertung (A1) unterhalb des Grenzwertes (x) liegt.

3. Verfahren nach einem der Ansprüche 1 oder 2,
**dadurch gekennzeichnet, dass**
der Grenzwert (x) dem einfachen bis fünffachen, vorzugsweise dem zweifachen Nenndruck (pnenn) der Druckmesszelle (1) oder einem dazu korrespondierenden Wert entspricht.

4. Verfahren nach einem der vorhergehenden Ansprüche,
**dadurch gekennzeichnet, dass**
ein erstes Druckmesssignal (D1) für die erste Auswertung (A1) gemäß der Formel

$$D1 = 1 - C_r / C_m$$

berechnet wird.

5. Verfahren nach einem der vorhergehenden Ansprüche,
   **dadurch gekennzeichnet, dass**
   in dem zweiten Messbereich eine Messwertkompensation erfolgt.

6. Verfahren gemäß einem der vorhergehenden Ansprüche,
   **dadurch gekennzeichnet, dass**
   bei dem Übergang von der ersten Auswertung (A1) zu der zweiten Auswertung (A2) der aktuelle Wert der Referenzkapazität (Cr) $C_r(p=x)$ ermittelt und abgespeichert wird.

7. Verfahren nach einem der Ansprüche 1 - 5,
   **dadurch gekennzeichnet, dass** der Wert
   der Referenzkapazität ($C_r$) beim Übergang von der ersten Auswertung zu der zweiten Auswertung (A2) werksseitig vorgegeben ist.

8. Verfahren gemäß Anspruch 6 oder 7,
   **dadurch gekennzeichnet, dass** der Messwert der Referenzkapazität $C_r$ in der zweiten Auswertung mit dem abgespeicherten Wert $C_r$ (p=x) kompensiert wird.

9. Verfahren nach einem der vorhergehenden Ansprüche,
   **dadurch gekennzeichnet, dass** das Druckmesssignal D für die zweite Auswertung (A2) gemäß der Formel

$$A2 = m \ (C_r(p) \ - \ C_r(p=x)) \ + \ x$$

berechnet wird.

10. Verfahren nach einem der vorhergehenden Ansprüche,
    **dadurch gekennzeichnet, dass** ein Maximalwert des zweiten Druckmesssignals (D2) gemäß der zweiten Auswertung (A2) in einem Speicher abgelegt wird.

11. Verfahren nach einem der vorhergehenden Ansprüche,
    **dadurch gekennzeichnet, dass** eine Anzahl der Übergänge von dem ersten Messbereich in den zweiten Messbereich in einem Speicher abgelegt wird.

12. Druckmessanordnung zur Bereitstellung eines Druckmesssignals (D) mit einer kapazitiven Druckmesszelle (1) mit

    - einem Grundkörper (3) und einer vorderseitig an dem Grundkörper angeordneten Messmembran (59, wobei an dem Grundkörper (3) und an der Messmembran (5) Elektroden (7, 9, 11) angeordnet sind, die in einem Bereich der Messmembran (5) mit hoher Drucksensibilität eine Messkapazität ($C_m$) und in einem Bereich der Messmembran (5) mit geringerer Drucksensibilität eine Referenzkapazität ($C_r$) ausbilden, **gekennzeichnet durch** eine Messelektronik (9), die geeignet ausgebildet ist ein Druckmessverfahren gemäß einem der vorhergehenden Ansprüche auszuführen.

13. Druckmessanordnung gemäß Anspruch 12,
    **dadurch gekennzeichnet, dass**
    auf der Messmembran (5) und/oder dem Grundkörper (3) eine die Elektroden (7, 9, 11) bedeckende Isolierung (13) angeordnet ist, die vorzugsweise als Verglasung ausgebildet ist.

14. Druckmessanordnung gemäß einem der Ansprüche 12 bis 13,
    **dadurch gekennzeichnet, dass**
    die Elektrode (7, 9, 11) der Messmembran (5) oder des Grundkörpers (3) durchgehend, vorzugsweise als durchgehende Metallisierung, ausgebildet ist und die andere Elektrode (7, 9, 11) zur Ausbildung der Kapazitäten ($C_m$,

C$_r$) strukturiert, vorzugsweise als strukturierte Metallisierung, ausgebildet ist.

**15.** Druckmessanordnung gemäß Anspruch 14,
**dadurch gekennzeichnet, dass**
die Referenzelektrode (11) die Messelektrode (9) ringförmig umgibt.


**Claims**

**1.** Method for identifying a pressure measurement signal (D) in a capacitive pressure measurement cell (1) having a base body (3) and a measurement membrane (5) arranged on the front side of the base body (3), wherein electrodes (7, 9, 11) are arranged on the base body (3) and on the measurement membrane (5), which electrodes form a measurement capacitance (C$_m$) in a region of the measurement membrane (5) having a high pressure sensitivity and a reference capacitance (C$_r$) in a region of the measurement membrane (5) having a lower pressure sensitivity, wherein the measurement capacitance (C$_m$) and the reference capacitance (C$_r$) are detected independently of one another and the pressure measurement signal (D) is identified in a first measurement region according to a first evaluation (A1) from the measurement capacitance (C$_m$) and the reference capacitance (C$_r$) and the pressure measurement signal (D) is identified in a second measurement region according to a second evaluation (A2) from the reference capacitance (C$_r$),
**characterized in that**
a transition from the first evaluation (A1) to the second evaluation (A2) takes place when the pressure measurement signal (D) according to the first evaluation (A1) exceeds a limit value (x) .

**2.** Method according to Claim 1, **characterized in that** both evaluations (A1, A2) take place at the same time and the first evaluation (A1) is discarded when the pressure measurement signal (D) of the first evaluation (A1) exceeds the limit value (x) and the second evaluation (A2) is discarded when the pressure measurement signal (D) of the first evaluation (A1) is below the limit value (x).

**3.** Method according to either of Claims 1 and 2, **characterized in that** the limit value (x) corresponds to one to five times, preferably to two times, the rated pressure (prated) of the pressure measurement cell (1) or to a value corresponding thereto.

**4.** Method according to one of the preceding claims, **characterized in that** a first pressure measurement signal (D1) for the first evaluation (A1) is calculated according to the formula

$$D1 \;=\; 1 \;-\; C_r \;/\; C_m.$$

**5.** Method according to one of the preceding claims, **characterized in that** measurement value compensation takes place in the second measurement region.

**6.** Method according to one of the preceding claims, **characterized in that**, in the transition from the first evaluation (A1) to the second evaluation (A2), the present value of the reference capacitance (C$_r$) C$_r$(p=x) is identified and stored.

**7.** Method according to one of Claims 1-5, **characterized in that**, in the transition from the first evaluation to the second evaluation (A2), the value of the reference capacitance (C$_r$) is predefined at the factory.

**8.** Method according to Claim 6 or 7, **characterized in that** the measurement value of the reference capacitance (C$_r$) is compensated in the second evaluation with the stored value C$_r$ (p=x) .

**9.** Method according to one of the preceding claims, **characterized in that** the pressure measurement signal (D) for the second evaluation (A2) is calculated according to the formula

$$A2 \;=\; m \;(C_r(p) \;-\; C_r(p{=}x)) \;+\; x.$$

**10.** Method according to one of the preceding claims, **characterized in that** a maximum value of the second pressure measurement signal (D2) according to the second evaluation (A2) is stored in a memory.

11. Method according to one of the preceding claims, **characterized in that** a number of transitions from the first measurement region to the second measurement region is stored in a memory.

12. Pressure measurement arrangement for providing a pressure measurement signal (D) having a capacitive pressure measurement cell (1) having

- a base body (3) and a measurement membrane (5) arranged on the front side of the base body, wherein electrodes (7, 9, 11) are arranged on the base body (3) and on the measurement membrane (5), which electrodes form a measurement capacitance ($C_m$) in a region of the measurement membrane (5) having a high pressure sensitivity and a reference capacitance ($C_r$) in a region of the measurement membrane (5) having a lower pressure sensitivity,

**characterized by** a measurement electronics system (9), which is configured in an appropriate manner for executing a pressure measurement method according to one of the preceding claims.

13. Pressure measurement arrangement according to Claim 12, **characterized in that** an insulation (13) that covers the electrodes (7, 9, 11) is arranged on the measurement membrane (5) and/or on the base body (3), which insulation is preferably configured as a glazing.

14. Pressure measurement arrangement according to either of Claims 12 and 13, **characterized in that** the electrode (7, 9, 11) of the measurement membrane (5) or of the base body (3) is configured in a continuous manner, preferably as a continuous metallization, and the other electrode (7, 9, 11) is configured in a structured manner, preferably as a structured metallization, to form the capacitances ($C_m$, $C_r$).

15. Pressure measurement arrangement according to Claim 14, **characterized in that** the reference electrode (11) surrounds the measurement electrode (9) in an annular manner.

**Revendications**

1. Procédé permettant de déterminer ou d'évaluer un signal de mesure de pression (D) dans une cellule de mesure de pression capacitive (1) comprenant un corps de base (3) et une membrane de mesure (5) montée sur la face avant du corps de base (3), sur le corps de base (3) et sur la membrane de mesure (5) étant montées des électrodes (7, 9, 11) formant, dans une zone de la membrane de mesure (5) ayant une sensibilité élevée à la pression, une capacité de mesure, $C_m$ et dans une zone de la membrane de mesure (5) ayant une plus faible sensibilité à la pression, une capacité de référence ($C_r$), la capacité de mesure ($C_m$) et la capacité de référence ($C_r$) étant saisies indépendamment l'une de l'autre et le signal de mesure de pression (D) étant déterminé dans une première plage de mesure conformément à une première évaluation (A1) à partir de la capacité de mesure $C_m$ et de la capacité de référence ($C_r$), et
dans une seconde plage de mesure le signal de mesure de pression (D) étant déterminé conformément à une seconde évaluation (A2) à partir de la capacité de référence ($C_r$), **caractérisé en ce que**
la transition entre la première évaluation (A1) et la seconde évaluation (A2) se produit lorsque le signal de mesure de pression (D) conforme à la première évaluation (A1) dépasse une valeur limite (x).

2. Procédé conforme à la revendication 1,
**caractérisé en ce que**
les deux évaluations (A1, A2) s'effectuent simultanément et la première évaluation (A1) est rejetée lorsque le signal de mesure de pression (D) de cette première évaluation (A1) dépasse la valeur limite (x), et la seconde évaluation (A2) est rejetée lorsque le signal de mesure de pression (D) de la première évaluation (A1) est situé au-dessous de la valeur limite (x).

3. Procédé conforme à l'une des revendications 1 et 2,
**caractérisé en ce que**
la valeur limite (x) correspond à une fois à cinq fois, de préférence à deux fois la pression nominale ($p_{nenn}$) de la cellule de mesure de pression (1) ou à une valeur correspondant à celle-ci.

**4.** Procédé conforme à l'une des revendications précédentes,
**caractérisé en ce qu'**
un premier signal de mesure de pression (D1) pour la première évaluation (A1) est calculé conformément à la formule

$$D1 = 1 - C_r / C_m$$

**5.** Procédé conforme à l'une des revendications précédentes,
**caractérisé en ce que**
dans la seconde plage de mesure une compensation de valeur de mesure est effectuée.

**6.** Procédé conforme à l'une des revendications précédentes,
**caractérisé en ce que**
lors de la transition entre la première évaluation (A1) et la seconde évaluation (A2), la valeur actuelle de la capacité de référence (Cr) $C_r$ (p=x) est déterminée et enregistrée.

**7.** Procédé conforme à l'une des revendications 1 à 5,
**caractérisé en ce que**
la valeur de la capacité de référence ($C_r$) lors de la transition entre la première évaluation et la seconde évaluation (A2) est prédéterminée en usine.

**8.** Procédé conforme à la revendication 6 ou 7,
**caractérisé en ce que**
dans la seconde évaluation la valeur de mesure de la capacité de référence Cr est compensée avec la valeur enregistrée Cr (p=x).

**9.** Procédé conforme à l'une des revendications précédentes,
**caractérisé en ce que**
le signal de valeur de mesure D pour la seconde évaluation (A2) est calculé conformément à la formule

$$A2 = m (C_r(p) - C_r(p=x)) + x$$

**10.** Procédé conforme à l'une des revendications précédentes,
**caractérisé en ce que**
la valeur maximum du second signal de mesure de pression (D2) conformément à la seconde évaluation (A2) est déposée dans une mémoire.

**11.** Procédé conforme à l'une des revendications précédentes,
**caractérisé en ce que**
le nombre de transitions entre la première plage de mesure et la seconde plage de mesure est déposé dans une mémoire.

**12.** Dispositif de mesure de pression permettant de fournir un signal de mesure de pression (D) comprenant une cellule de mesure de pression capacitive (1) comportant :

- un corps de base (3) et une membrane de mesure (5) montée sur la face avant du corps de base, sur le corps de base (3) et sur la membrane de mesure (5) étant montées des électrodes (7, 9, 11) qui, dans une zone de la membrane de mesure (5) ayant une sensibilité élevée à la pression forment une capacité de mesure ($C_m$) et dans une zone de la membrane de mesure (5) ayant une plus faible sensibilité à la pression forment une capacité de référence ($C_r$),

**caractérisé par**
une électronique de mesure (9) qui est réalisée pour permettre la mise en oeuvre d'un procédé de mesure de pression conforme à l'une des revendications précédentes.

**13.** Dispositif de mesure de pression conforme à la revendication 12,

**caractérisé en ce que**
sur la membrane de mesure (5) et/ou le corps de base (3) est montée une isolation (13) recouvrant les électrodes (7, 9, 11) qui est, de préférence réalisée sous la forme d'une vitrification.

14. Dispositif de mesure de pression conforme à l'une des revendications 12 à 13,
**caractérisé en ce que**
l'électrode (7, 9, 11) de la membrane de mesure (5) ou du corps de base (3) est continue et, de préférence réalisée sous la forme d'une métallisation continue, et l'autre électrode (7, 9, 11) est structurée pour former les capacités ($C_m$, $C_r$), de préférence sous la forme d'une métallisation structurée.

15. Dispositif de mesure de pression conforme à la revendication 14,
**caractérisé en ce que**
l'électrode de référence (11) entoure annulairement l'électrode de mesure (9).

Fig. 1

## Fig. 2

$$A1 = 1 - C_r/C_m$$

Druck (normiert)

p

1
$p_{nenn}$

2
x

10

## Fig. 3

$C_r$

$C_{r2}$

$C_r$

Druck (normiert)

p

1
$p_{nenn}$

2
x

10

## Fig. 4

Kapazitäten bei Überdruck - 0,1bar CERTEC

## Fig. 5

1-Cr/Cm bei 0,1bar CERTEC

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070209443 A1
- EP 006584 A
- WO 2004013593 A1
- US 2007209443 A1